(19) Europäisches Patentamt
European Patent Office
Office européen des brevets

(11) **EP 1 411 233 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
*F02D 41/18* (2006.01)      *F02D 41/22* (2006.01)
*F02D 41/32* (2006.01)      *F02D 41/00* (2006.01)
*G01F 1/684* (2006.01)      *G01F 1/698* (2006.01)
*G01F 1/88* (2006.01)

(21) Anmeldenummer: **03010969.8**

(22) Anmeldetag: **16.05.2003**

(54) **Verfahren und Vorrichtung zur Überwachung eines durch ein Stellelement eingestellten Massenstroms**

A method and system for monitoring a mass flow controlled by an actuator

Procédé et dispositif de surveillance d'un débit massique commandé par un actuateur

(84) Benannte Vertragsstaaten:
**DE FR IT SE**

(30) Priorität: **16.10.2002 DE 10248194**

(43) Veröffentlichungstag der Anmeldung:
**21.04.2004 Patentblatt 2004/17**

(73) Patentinhaber: **ROBERT BOSCH GMBH**
**70442 Stuttgart (DE)**

(72) Erfinder:
• **Wild, Ernst**
**71739 Oberriexingen (DE)**
• **Schlesiger, Oliver**
**71679 Asperg (DE)**
• **Reuschenbach, Lutz**
**70469 Stuttgart (DE)**
• **Koehler, Christian**
**74391 Erligheim (DE)**

(56) Entgegenhaltungen:
**EP-A- 0 695 928          US-A- 4 587 842**
**US-A- 4 774 833**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 411 233 B1

**Beschreibung**

Stand der Technik

Die Erfindung geht von einem Verfahren und von einer Vorrichtung zur Überwachung eines durch ein Stellelement eingestellten Massenstroms nach der Gattung der unabhängigen Ansprüche aus.

Aus der US 4,774,833 ist eine Vorrichtung zur Ermittlung der Richtung eines Massenstroms bekannt. Dabei ist in einer Massenstromleitung ein thermoelektrischer Massenstromsensor angeordnet. Stromauf und stromab des thermoelektrischen Massenstromsensors ist jeweils ein Temperaturmesselement angeordnet. Vom thermoelektrischen Massenstromsensor wird Wärme zu dem stromab des Massenstromsensors gelegenen Temperaturmesselement geleitet, so dass dieses Temperaturmesselement immer eine höhere Temperatur als das Temperaturmesselement stromauf des Massenstromsensors aufweist.

Wird bei einer Brennkraftmaschine aus dem Abgasstrang des Motors ein Abgasmassenstrom entnommen und über ein Abgasrückführventil in eine Abgasrückführleitung dem Motor dosiert zugeführt, so spricht man von Abgasrückführung.

Es lässt sich nicht vermeiden, dass bei einer Abgasrückführung Ablagerungen von Feststoffen aus dem Abgas- und dem Ansaugsystem das Abgasrückführventil und die Abgasrückführleitung im Laufe der Zeit beeinträchtigen können und deshalb die rückgeführte Abgasmenge mit zunehmender Laufzeit der Brennkraftmaschine abnimmt. Aus diesem Grund ist es erforderlich, die Funktion des Abgasrückführsystems der Brennkraftmaschine zu überwachen und Maßnahmen zu ergreifen, die solche fehlerhaften Veränderungen des Abgasmassenstroms kompensieren.

Zur Kompensation von fehlerhaften Veränderungen werden derzeit Konzepte eingesetzt, die auf folgendem Prinzip beruhen:

Es wird ein modellierter Partialdruck des rückgeführten Abgases aus einer Durchflusskennlinie des Abgasrückführventils abgeleitet und mit Hilfe eines unabhängigen Füllungssignals und eines berechneten internen Restgasdruckes wird ein Saugrohrdruck modelliert. Dieser modellierte Saugrohrdruck wird mit einem gemessenen Saugrohrdruck verglichen. Die auftretenden Differenzen werden in bestimmten Maßen als Fehler der Durchflusskennlinie des Abgasrückführventils interpretiert und gehen in Korrekturwerte für die Durchflusskennlinie des Abgasrückführventils ein. Die Art der Korrekturwerte richtet sich nach der Art des Fehlerbildes.

Ferner ist es nötig, den Abgasmassenstrom durch das Abgasrückführventil zu überwachen, wenn das Abgasrückführventil von der Steuerung der Abgasrückführung die Position "zu" einnehmen soll. Eine ungewollte Öffnung des Abgasrückführventils kann beispielsweise durch Ablagerungen im Dichtungsbereich des Abgasrückführventils oder durch mechanische Fehler entstehen, beispielsweise wenn eine Rückstellfeder des Abgasrückführventils gebrochen ist. Ferner kann eine Öffnung des Abgasrückführventils durch das vorherrschende Druckgefälle über dem Abgasrückführventil sowie durch Pulsationen im Saugrohr und/oder im Abgastrakt entstehen. Das Abgasrückführventil kann durch das anliegende Druckgefälle geöffnet werden, ohne dass dies die Steuerung vorsieht.

Eine solch ungewollte Öffnung des Abgasrückführventils kann bei Abgasrückführsystemen mit Lagerückmeldung erkannt werden. Nicht erkannt werden kann hingegen die Größe und Richtung des aus dieser Öffnung resultierenden Abgasmassenstroms. Bei Abgasrückführventilen ohne Lagerückmeldung ist sowohl die Öffnung des Abgasrückführventils als auch der daraus resultierende Abgasmassenstrom nicht bekannt.

Bei Brennkraftmaschinen mit einer Erhöhung des Gasdruckes vor der Drosselklappe, beispielsweise aufgrund eines Turboladers, und mit Abgasrückführung ist die Durchströmungsrichtung des Abgasrückführventils zu überwachen, damit sichergestellt ist, dass keine Frischluft über die Abgasrückführleitung in den Abgasstrang gelangen kann. Frischluft könnte dann über die Abgasrückführleitung in den Abgasstrang gelangen, wenn im Saugrohr im Vergleich zum Abgasstrang größere Gasdrücke herrschen und das Abgasrückführventil geöffnet ist.

Vorteile der Erfindung

Das erfindungsgemäße Verfahren und die erfindungsgemäße Vorrichtung zur Überwachung eines durch ein Stellelement eingestellten Massenstroms mit den Merkmalen der unabhängigen Ansprüche haben demgegenüber den Vorteil, dass ein erster Wert für eine Temperatur am Stellelement gemessen wird, dass ein zweiter Wert für die Temperatur am Stellelement in Abhängigkeit mehrerer Betriebskenngrößen der Brennkraftmaschine modelliert wird und dass in Abhängigkeit einer Differenz zwischen dem ersten Wert und dem zweiten Wert die Richtung des Massenstroms ermittelt wird. Auf diese Weise kann das beschriebene Konzept der Kompensation von fehlerhaften Veränderungen des Massenstroms in einer Massenstromleitung verbessert und zusätzlich eine Möglichkeit geschaffen werden, einen ungewollten Massenstrom durch das Stellelement und dessen Richtung zu erkennen. Über die Temperaturmessung und den Vergleich mit einer aus anderen Betriebskenngrößen modellierten Temperatur kann zumindest auf die Fließrichtung des Massenstroms geschlossen werden. Somit lässt sich der Massenstrom zumindest in seiner Fließrichtung detektieren. Durch die Messung der Temperatur am Stellelement wird die bei ungewollten Öffnungen des Stellelementes bisher nicht beobachtbare Größe des Massenstroms durch die erste Massenstromleitung nachbildbar.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, wenn der zweite Wert abhängig von einem Druck vor dem Stellelement, einem Druck hinter dem Stellelement, einer Stellung des Stellelements und eines modellierten Massenstroms durch das Stellelement ermittelt wird. Auf diese Weise lässt sich der zweite Wert für die Temperatur am Stellelement besonders einfach und mit in der Regel bereits vorhandenen Sensoren ermitteln.

Besonders vorteilhaft ist es auch, wenn der Massenstrom durch das Stellelement abhängig von einer Massenstrombilanz oder einer Bilanz einer davon abgeleiteten Größe einer zweiten Massenstromleitung der Brennkraftmaschine, in die die erste Massenstromleitung mündet, modelliert wird. Auf diese Weise lässt sich auch der Massenstrom zur Bestimmung des zweiten Wertes für die Temperatur am Stellelement besonders einfach und mit in der Regel bereits vorhandenen Sensoren ermitteln.

Ein weiterer Vorteil besteht darin, dass die Differenz zwischen dem ersten Wert und dem zweiten Wert für die Temperatur am Stellelement mit einer vorgegebenen Schwelle verglichen wird und dass die Richtung des Massenstroms durch das Stellelement aus der Lage der Differenz bezüglich der vorgegebenen Schwelle ermittelt wird. Somit ist die Detektion der Richtung des Massenstroms besonders einfach durch Schwellwertvergleich möglich.

Ein weiterer Vorteil besteht darin, dass die Stellung des Stellelements in Abhängigkeit der Differenz zwischen dem ersten Wert und dem zweiten Wert für die Temperatur am Stellelement korrigiert wird. Auf diese Weise lässt sich die bei ungewollten Öffnungen des Stellelements bisher nicht beobachtbare Größe des Massenstroms durch die erste Massenstromleitung besonders einfach, beispielsweise mittels einer Regelung, nachbilden.

Zeichnung

Ein Ausführungsbeispiel der Erfindung ist in der Zeichnung dargestellt und in der nachfolgenden Beschreibung näher erläutert. Es zeigen

Figur 1 ein Blockschaltbild einer Brennkraftmaschine,

Figur 2 ein erstes Funktionsdiagramm zur Beschreibung des erfindungsgemäßen Verfahrens und der erfindungsgemäßen Vorrichtung,

Figur 3 einen Ablaufplan zur Beschreibung des erfindungsgemäßen Verfahrens und

Figur 4 ein zweites Funktionsdiagramm zur Beschreibung des erfindungsgemäßen Verfahrens und der erfindungsgemäßen Vorrichtung.

Figur 5 zeigt ein Funktionsdiagramm zur Ermittlung der Richtung eines Massenstroms durch ein Stellelement und zur Ansteuerung des Stellelementes.

Beschreibung des Ausführungsbeispiels

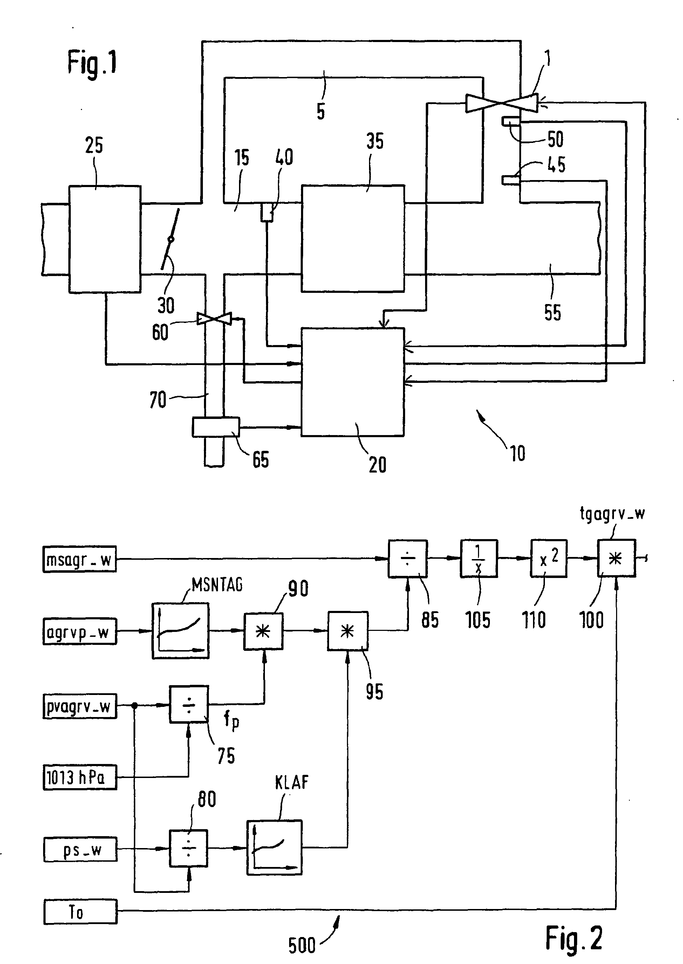

In Figur 1 kennzeichnet 10 eine Brennkraftmaschine mit einem Verbrennungsmotor 35, der beispielsweise als Ottomotor oder als Dieselmotor ausgebildet sein kann. Dem Verbrennungsmotor 35 wird über eine zweite Massenstromleitung 15, beispielsweise einem Saugrohr, ein Gasgemisch zur Verbrennung zugeführt. Dem Saugrohr 15 wird dabei einerseits Frischluft über eine Luftmassenmessvorrichtung 25, beispielsweise einen Heißfilm-Luftmassenmesser, und eine Drosselklappe 30 sowie Abgas über eine erste Massenstromleitung 5, beispielsweise einen Abgasrückführkanal, andererseits zugeführt. Der Abgasrückführkanal 5 verbindet einen Abgasstrang 55 des Verbrennungsmotors 35 mit dem Saugrohr 15. Im Abgasrückführkanal 5 ist ein Abgasrückführventil 1 als Stellelement angeordnet, um die Größe des Abgasmassenstroms zu steuern. Dazu wird das Abgasrückführventil 1 von einer Motorsteuerung 20 angesteuert und eine Lagerückmeldung über die Stellung des Abgasrückführventils 1 und damit dessen Öffnungsgrad an die Motorsteuerung 20 zurückgemeldet. Dem Saugrohr 15 kann wie in Figur 1 dargestellt auch eine Tankentlüftungsleitung 70 zugeführt sein, die eine Massenstrommessvorrichtung 65 sowie ein von der Motorsteuerung 20 angesteuertes Tankentlüftungsventil 60 zur Steuerung des dem Saugrohr 15 über die Tankentlüftungsleitung 70 zugeführten Massenstroms umfasst. Die Massenstrommessvorrichtung 65 misst den Massenstrom in der Tankentlüftungsleitung 70 und gibt den Messwert an die Motorsteuerung 20 ab. Der Heiß-Luftmassenmesser 25 misst den Massenstrom der dem Saugrohr 15 über die Drosselklappe 30 zugeführten Frischluft und gibt diesen Messwert ebenfalls an die Motorsteuerung 20 ab. Im Saugrohr 15 ist ferner ein Saugrohrdrucksensor 40 vorgesehen, der den Saugrohrdruck misst und den Messwert an die Motorsteuerung 20 abgibt. Beim Abgasrückführventil 1 ist im Abgasrückführkanal 5 ein Temperatursensor 50 angeordnet, der die Temperatur am Abgasrückführventil 1 misst und den Messwert an die Motorsteuerung 20 abgibt. Im Bereich der Abzweigung des Abgasrückführkanals 5 vom Abgasstrang 55 ist im Abgasrückführkanal 5 ein zweiter Drucksensor 45 angeordnet, der den Druck im Bereich der Abzweigung des Abgasrückführkanals 5 vom Abgasstrang 55 misst und den Messwert an die Motorsteuerung 20 weiterleitet.

Das Funktionsdiagramm gemäß Figur 2 stellt Mittel 500 zur Ermittlung der modellierten Temperatur tgagrv_ $w_M$ am Abgasrückführventil 1 dar.

Erfindungsgemäß ist es nun vorgesehen, die Temperatur am Abgasrückführventil 1 mittels des Temperatursensors 50 einerseits zu messen und andererseits in Abhängigkeit mehrerer Betriebskenngrößen der Brennkraftmaschine 10 zu modellieren und in Abhängigkeit einer Differenz zwischen dem gemessenen Wert und dem modellierten Wert für die Temperatur am Abgasrückführventil 1 die Richtung des Abgasmassenstroms durch das Abgasrückführventil 1 zu ermitteln. Dabei kann der Massenstrom msagr_w durch das Abgasrückführventil 1 wie folgt berechnet werden:

$$ msagr\_w = MSNTAG(agrvp\_w) \cdot ftmagr \cdot f_p \cdot KLAF\left(\frac{ps\_w}{pvagrv\_w}\right) \qquad (1). $$

Dabei ist $ftmagr = \sqrt{T_0 / tgagrv\_w}$, wobei $T_0 = 0°$ C und tgagrv_w die Temperatur am Abgasrückführventil 1 ist. Ferner ist $f_p$ ein Druckkorrekturfaktor mit $f_p = \dfrac{pvagrv\_w}{1013 hPa}$. ps_w ist der Druck im Saugrohr 15, der vom Saugrohrdrucksensor 40 gemessen wird.

pvagrv_w ist der Druck im Abgasrückführkanal 5, im Bereich der Abzweigung vom Abgasstrang 55, der vom zweiten Drucksensor 45 ermittelt wird. Ferner ist agrvp_w die Stellung oder Position des Abgasrückführventils 1 und damit dessen Öffnungsgrad, der mittels eines geeigneten Sensors in dem Fachmann bekannter Weise ermittelt und ebenfalls der Motorsteuerung 20 zugeführt ist. Die Kennlinie MSNTAG wird vom Hersteller des Abgasrückführventils geliefert und gibt den Normmassenstrom durch das Abgasrückführventil 1 in Abhängigkeit von der Stellung agrvp_w des Abgasrückführventils 1 an. Die Normbedingungen umfassen dabei eine Temperatur von 0° C, ein Verhältnis des Druckes hinter dem Abgasrückführventil 1 zum Druck vor dem Abgasrückführventil 1 im Abgasrückführkanal 5 kleiner 0,52, was einem überkritischen Druckverhältnis entspricht sowie einem Druck vor dem Abgasrückführventil 1 von 1013 hPa. Der Druck vor dem Abgasrückführventil 1 ist dabei der Druck auf Seiten des Abgasstrangs 55 und der Druck hinter dem Abgasrückführventil 1 ist der Druck auf Seiten des Saugrohrs 15. Der Druck vor dem Abgasrückführventil 1 wird vom zweiten Drucksensor 45 erfasst und der Druck hinter dem Abgasrückführventil 1 wird vom Saugrohrdrucksensor 40 erfasst. Die Anpassung des Abgasmassenstroms an die tatsächlichen Druckverhältnisse geschieht über die Ausflusskennlinie KLAF, die mit dem Verhältnis aus dem Saugrohrdruck ps_w zum Druck pvagrv_w vor dem Abgasrückführventil 1 adressiert wird. Die Ausflusskennlinie KLAF kann dabei auf einem Motorenprüfstand und zur Messung der übrigen Größen in Gleichung (1) ermittelt werden. Zu diesem Zweck kann in den Abgasrückführkanal 5 eine Massenstrommessvorrichtung zur Erfassung des Abgasmassenstroms msagr_w eingebaut sein.

Setzt man in Gleichung (1) für die Temperatur tgagrv_w am Abgasrückführventil 1 die durch den Temperatursensor 50 gemessene Temperatur ein und sind alle anderen Größen der Gleichung (1) durch Messung in der beschriebenen Weise oder durch Modellierung ermittelt, so ergibt sich der Massenstrom msagr_w durch das Abgasrückführventil 1.

Durch Umformen von Gleichung (1) erhält man

$$ tgagrv\_w_M = T_0 \cdot \left(\frac{msagr\_w}{MSNTAG(agrvp\_w) \cdot f_p \cdot KLAF\left(\frac{ps\_w}{pvagrv\_w}\right)}\right)^{-2} \qquad (2). $$

Dabei ist tgagrv_$w_M$ die modellierte Temperatur am Abgasrückführventil 1. Zur Bestimmung der modellierten Temperatur tgagrv_$w_M$ kann nun nicht der gemäß Gleichung (1) ermittelte Abgasmassenstrom msagr_w durch das Abgasrückführventil 1 herangezogen werden. Aus diesem Grund wird der Abgasmassenstrom msagr_w durch einen Vergleich der zuströmenden und abfließenden Massenströme des Saugrohrs 15 bestimmt. Grundlage für diese Modellierung ist eine Saugrohrdruckmodellierung. Für den Saugrohrdruck ps_w wird dabei angenommen, das gilt:

$$ps\_w = F \cdot \int \left( \dot{m}_{zu} - \dot{m}_{ab} \right) dt \qquad\qquad (3).$$

Dabei kennzeichnet $\dot{m}_{zu}$ die zufließenden Massenströme zum Saugrohr 15 und $\dot{m}_{ab}$ die aus dem Saugrohr 15 abfließenden Massenströme. F ist ein Umrechnungs- bzw. Proportionalitätsfaktor und konstant. Löst man Gleichung (3) nach dem durch den Abgasrückführkanal 5 in das Saugrohr 15 zufließenden Abgasmassenstrom msagr_w auf, so erhält man

$$msagr\_w = \frac{dps\_w}{dt} - \dot{m}_{dk} + \dot{m}_{zyl} - mste\_w \qquad\qquad (4).$$

Dabei ist $\dot{m}_{dk}$ der Massenstrom durch die Drosselklappe (30), der vom Heißfilm-Luftmassenmesser (25) erfasst wird und $\dot{m}_{zyl}$ der aus dem Saugrohr 15 in den Verbrennungsmotor 35 bzw. die dortigen Zylinder abfließende Massenstrom, der etwa der Zylinderfüllung entspricht und aus dem vom Saugrohrdrucksensor 40 gemessenen Saugrohrdruck ps_w multipliziert mit einem Umrechnungsfaktor fupsrl in dem Fachmann bekannter Weise in der Motorsteuerung 20 ermittelt wird. Die Differenziation $\dfrac{dps\_w}{dt}$ lässt sich ebenfalls in der Motorsteuerung 20 als erste zeitliche Ableitung des vom Saugrohrdrucksensor 40 gemessenen Saugrohrdrucks ps_w ermitteln. Weiterhin gilt für die zufließenden Massenströme $\dot{m}_{zu}$ der folgende Zusammenhang:

$$\dot{m}_{zu} = msagr\_w + \dot{m}_{dk} + mste\_w \qquad\qquad (5).$$

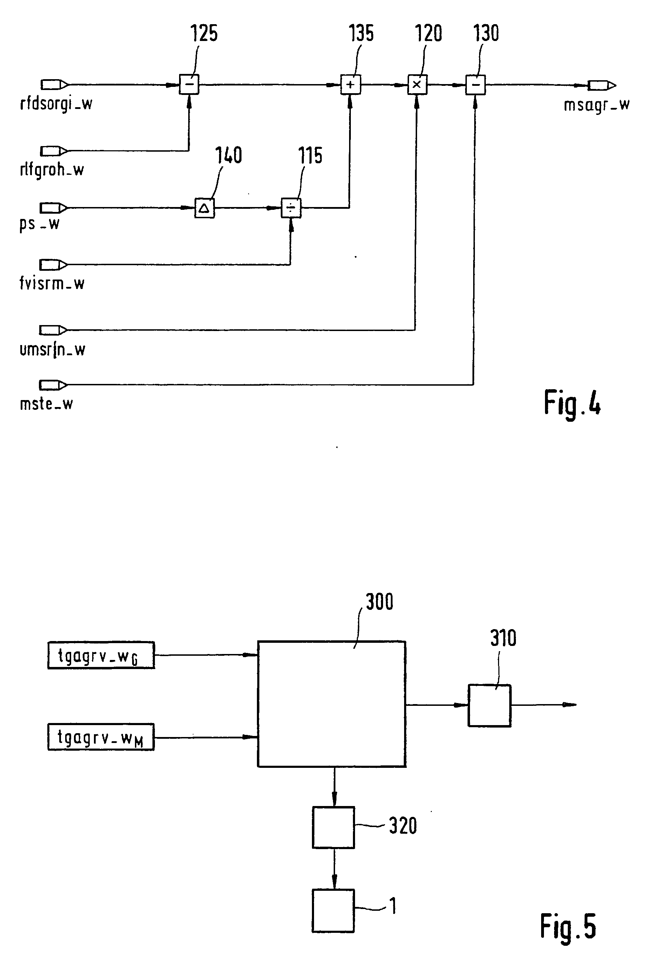

Die dem Saugrohr 15 zufließenden Massenströme $\dot{m}_{zu}$ setzen sich also aus der Summe des über die Drosselklappe 30 zugeführten Frischluftmassenstroms $\dot{m}_{dk}$ und des über den Abgasrückführkanal 5 dem Saugrohr 15 zugeführten Abgasmassenstroms msagr_w zusammen. Zusätzlich können die zufließenden Massenströme $\dot{m}$ noch durch den von der Tankentlüftungsleitung 70 dem Saugrohr 15 zugeführten Massenstrom mste_w ergänzt sein, wie dies in Gleichung (4) und Gleichung (5) berücksichtigt ist. Die Berechnung des Abgasmassenstroms msagr_w wird beispielsweise auf der Füllungsebene durchgeführt. Gemäß dem Funktionsdiagramm nach Figur 4 wird dabei ein aus dem Saugrohr 15 abfließender Füllungsanteil rfdsorgi_w, der den aus dem Saugrohr 15 in die Zylinder bzw. den Verbrennungsmotor 35 abfließenden Massenstrom $\dot{m}_{zyl}$ repräsentiert, einem ersten Subtraktionsglied 125 zugeführt. Der abfließende Füllungsanteil rfdsorgi_w kann dabei beispielsweise aus dem vom Saugrohrdrucksensor 40 ermittelten Saugrohrdruck ermittelt werden, indem dieser Saugrohrdruck mit dem Umrechnungsfaktor fupsrl in dem Fachmann bekannter Weise in der Motorsteuerung 20 multipliziert wird. Ferner ist dem ersten Subtraktionsglied 125 der über die Drosselklappe 30 dem Saugrohr 15 zufließende Füllungsanteil rlfgroh_w zugeführt, der ebenfalls in der beschriebenen Weise durch einen in Figur 1 nicht dargestellten Drucksensor in Strömungsrichtung vor der Drosselklappe 30, beispielsweise zwischen Heißfilm-Luftmassenmesser 25 und Drosselklappe 30 angeordnet sein kann. Im ersten Subtraktionsglied 125 wird vom abfließenden Füllungsanteil rfdsorgi_w der über die Drosselklappe 30 zufließende Füllungsanteil rlfgroh_w abgezogen. Das Ergebnis wird einem Additionsglied 135 zugeführt. Der Saugrohrdruck ps_w wird einem Differenziator 140 zugeführt, der die zeitliche Ableitung $\dfrac{dps\_w}{dt}$ bildet und einem vierten Divisionsglied 115 zuführt. Dem vierten Divisionsglied 115 ist außerdem ein Umrechnungsfaktor fvisrm_w zugeführt. Somit wird beim vierten Divisionsglied 115 die zeitliche

Ableitung $\dfrac{dps\_w}{dt}$ durch den Umrechnungsfaktor fvisrm_w dividiert. Der Umrechnungsfaktor fvisrm_w entspricht dabei dem zuvor beschriebenen Proportionalfaktor F aus Gleichung (3), jedoch auf Füllungsebene, sodass am Ausgang des vierten Divisionsgliedes 115 ein entsprechender Füllungswert dem Additionsglied 135 zugeführt und dort mit dem Ausgang des ersten Subtraktionsgliedes 125 addiert wird. Der Ausgang des Additionsgliedes 135 wird einem vierten Multiplikationsglied 120 zugeführt, dem außerdem ein Umrechnungsfaktor umsrln_w zur Umrechnung von Zylinderfüllungen in Massenströme zugeführt ist. Das vierte Multiplikationsglied 120 multipliziert somit den Ausgang des Additionsgliedes 135 mit dem Umrechnungsfaktor umsrln_w, sodass sich am Ausgang des vierten Multiplikationsgliedes 120 ein entsprechender Massenstromwert ergibt. Dieser wird einem zweiten Subtraktionsglied 130 zugeführt, dem außerdem der dem Saugrohr 15 über das Tankentlüftungsventil 60 zufließende und von der Massenstrommessvorrichtung 65 gemessene Tankentlüftungsmassenstrom mste_w zugeführt ist. Im zweiten Subtraktionsglied 130 wird vom Ausgang des vierten Multiplikationsgliedes 120 der Tankentlüftungsmassenstrom mste_w abgezogen, sodass sich als Ausgang des zweiten Abgasmassenstrom msagr_w ergibt. Das Funktionsdiagramm gemäß Figur 4 kann hardware- und/oder softwaremäßig in der Motorsteuerung 20 realisiert sein.

In Figur 2 ist ein weiteres Funktionsdiagramm zur Modellierung der Temperatur tgagrv_$w_M$ am Abgasrückführventil 1 dargestellt. Auch dieses Funktionsdiagramm kann hardware- und/oder softwaremäßig in der Motorsteuerung 20 implementiert sein. Im Funktionsdiagramm nach Figur 2 wird letztlich die Gleichung (2) umgesetzt. Der Abgasmassenstrom msagr_w, der gemäß dem Funktionsdiagramm nach Figur 4 ermittelt wurde, wird dabei einem dritten Divisionsglied 85 zugeführt und dort durch den Ausgang eines zweiten Multiplikationsgliedes 95 dividiert. Im zweiten Multiplikationsglied 95 wird der Ausgang eines ersten Multiplikationsgliedes 90 mit dem Ausgang der Ausflusskennlinie KLAF multipliziert. Das Produkt liegt dann am Ausgang des zweiten Multiplikationsgliedes 95 an. Im ersten Multiplikationsglied 90 wird der Ausgang der Kennlinie MSNTAG für den Abgasnormmassenstrom in Abhängigkeit der Stellung agrvp_w des Abgasrückführventils 1 als Eingangsgröße der Kennlinie MSNTAG mit dem Druckkorrekturfaktor $f_p$ am Ausgang eines ersten Divisionsgliedes 75 multipliziert. Das Produkt liegt am Ausgang des ersten Multiplikationsgliedes 90 an. Der Druckkorrekturfaktor $f_p$ wird im ersten Divisionsglied 75 durch Division des Druckes pvagrv_w vor dem Abgasrückführventil 1, der durch den zweiten Drucksensor 45 ermittelt wird, durch 1013 hPa ermittelt. Der Ausflusskennlinie KLAF ist als Eingangsgröße der Ausgang eines zweiten Divisionsgliedes 80 zugeführt, der sich durch Division des Saugrohrdrucks ps_w durch den Druck pvagrv_w vor dem Abgasrückführventil 1 ergibt. Der Ausgang des dritten Divisionsgliedes 85 wird in einem Kehrwertglied 105 einer Kehrwertbildung unterzogen. Der Ausgang des Kehrwertgliedes 105 ist einem Quadrierungsglied 110 zugeführt, in dem der Ausgang des Kehrwertgliedes 105 quadriert wird. Der Ausgang des Quadrierungsgliedes 110 ist einem dritten Multiplikationsglied 100 zugeführt und wird dort mit der Normtemperatur $T_0$ multipliziert, die 0° C beträgt. Dabei werden die Temperaturen in sämtlichen Gleichungen, in denen sie auftreten, in Kelvin umgerechnet eingesetzt. Am Ausgang des dritten Multiplikationsgliedes 100 liegt dann die modellierte Temperatur tgagrv_$w_M$ am Abgasrückführventil 1 vor.

Das Funktionsdiagramm gemäß Figur 2 stellt Mittel 500 zur Ermittlung der modellierten Temperatur tgagrv_$w_M$ am Abgasrückführventil 1 dar.

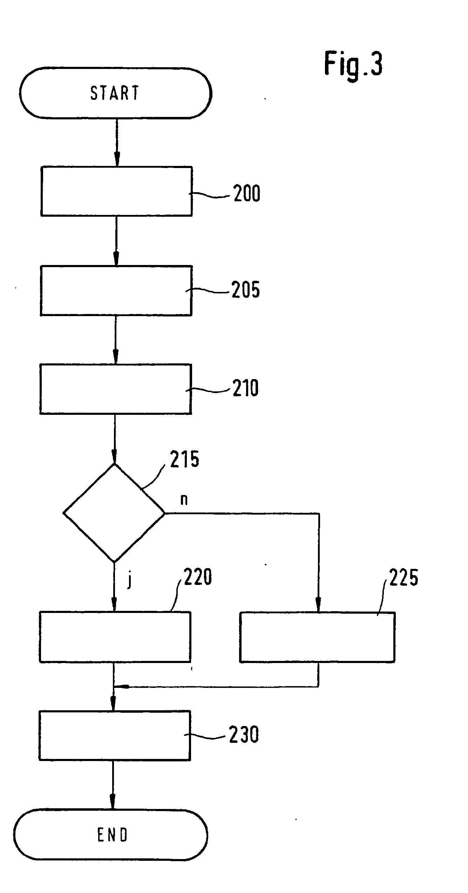

In Figur 3 ist ein Ablaufplan zur Verdeutlichung des erfindungsgemäßen Verfahrens dargestellt. Nach dem Start des Programms wird bei einem Programmpunkt 200 von der Motorsteuerung 20 mittels des Funktionsdiagramms nach Figur 4 der Abgasmassenstrom msagr_w in der beschriebenen Weise ermittelt. Anschließend wird zu einem Programmpunkt 205 verzweigt.

Bei Programmpunkt 205 wird in der beschriebenen Weise von der Motorsteuerung 20 mittels des in Figur 2 dargestellten Funktionsdiagramms die modellierte Temperatur tgagrv_$w_M$ am Abgasrückführventil 1 ermittelt. Anschließend wird zu einem Programmpunkt 210 verzweigt.

Bei Programmpunkt 210 bildet die Motorsteuerung 20 die Differenz $\Delta$ = tgagrv_$w_G$ - tgagrv_$w_M$ wobei tgagrv_$w_G$ die mittels Temperatursensor 50 gemessene Temperatur am Abgasrückführventil 1 ist. Anschließend wird zu einem Programmpunkt 215 verzweigt.

Bei Programmpunkt 215 prüft die Motorsteuerung 20, ob die Differenz $\Delta$ größer als ein vorgegebener Schwellwert ist. Ist dies der Fall, so wird zu einem Programmpunkt 220 verzweigt, andernfalls wird zu einem Programmpunkt 225 verzweigt.

Bei Programmpunkt 220 detektiert die Motorsteuerung 20 einen Abgasrückführmassenstrom durch den Abgasrückführkanal 5 in Richtung zum Abgasstrang 55. Anschließend wird zu einem Programmpunkt 230 verzweigt.

Bei Programmpunkt 225 detektiert die Motorsteuerung 20 einen Abgasrückführmassenstrom durch den Abgasrückführkanal 5 in Richtung zum Saugrohr 15. Anschließend wird zu Programmpunkt 230 verzweigt.

Bei Programmpunkt 230 führt die Motorsteuerung 20 die Differenz $\Delta$ einem Korrekturglied zu, das die Stellung des Abgasrückführventils 1 so korrigiert, dass die Differenz $\Delta$ weitgehend verschwindet. Das Korrekturglied kann dabei als Regler, beispielsweise mit einem Integral- und/oder einem Proportionalanteil ausgebildet sein. Dabei kann bei Programmpunkt 230 ein einzelner Regelschritt durchgeführt werden.

Anschließend wird das Programm verlassen und kann für weitere Regelschritte erneut durchlaufen werden.

In Figur 5 ist ein Funktionsdiagramm zum Vergleich der gemessenen Temperatur $tgagrv\_w_G$ am Abgasrückführventil 1 mit der modellierten Temperatur $tgagrv\_w_M$ dargestellt, die ebenfalls in der Motorsteuerung 20 implementiert sein kann. Die gemessene Temperatur $tgagrv\_w_G$ am Abgasrückführventil 1 und die modellierte Temperatur $tgagrv\_w_M$ am Abgasrückführventil 1 werden einem dritten Subtraktionsglied 300 zugeführt, in dem die Differenz $\Delta = tgagrv\_w_G - tgagrv\_w_M$ gebildet wird. Die Differenz $\Delta$ wird einerseits an einen Schwellwertvergleicher 310 weitergeleitet, der die Differenz $\Delta$ mit dem vorgegebenen Schwellenwert vergleicht und beispielsweise an seinem Ausgang gesetzt ist, wenn die Differenz $\Delta$ größer als der vorgegebene Schwellenwert ist, um einen Abgasmassenstrom durch den Abgasrückführkanal 5 in Richtung zum Abgasstrang 55 anzuzeigen und der an seinem Ausgang zurückgesetzt ist, um bei einer Differenz $\Delta$, die kleiner oder gleich dem vorgegebenen Schwellenwert ist, einen Abgasmassenstrom durch den Abgasrückführkanal 5 in Richtung zum Saugrohr 15 anzuzeigen. Ferner wird die Differenz $\Delta$ vom dritten Subtraktionsglied 300 einem Korrekturglied 320, beispielsweise einem Regler, zugeführt, der beispielsweise einen Intergral- und/oder einen Proportionalanteil umfasst. Der Ausgang des Reglers 320 steuert die Stellung bzw. den Öffnungsgrad des Abgasrückführventils 1 derart an, um die Differenz $\Delta$ gegen 0 zu führen und damit die Abweichung zwischen der gemessenen Temperatur $tgagrv\_w_G$ am Abgasrückführventil 1 und der modellierten Temperatur $tgagrv\_w_M$ am Abgasrückführventil 1 zu kompensieren.

Ist die Differenz $\Delta$ ungleich 0, so wird überhaupt erkannt, dass ein Abgasmassenstrom vorliegt, beispielsweise aufgrund einer ungewollten Öffnung des Abgasrückführventils 1.

Die Funktionsdiagramme der Figuren 2, 4 und 5 bilden die erfindungsgemäße Vorrichtung.

Die Erfindung ist am Beispiel eines Abgasmassenstroms in einem Abgasrückführkanal beschrieben, lässt sich aber für beliebige Massenströme in einer ersten Massenstromleitung realisieren, die in eine zweite Massenstromleitung mündet. Im hier beschriebenen Beispiel ist die erste Massenstromleitung der Abgasrückführkanal 5 und die zweite Massenstromleitung das Saugrohr 15.

Im beschriebenen Ausführungsbeispiel wurde der Abgasmassenstrom $msagr\_w$ gemäß Figur 4 auf der Füllungsebene modelliert. Er kann alternativ auch auf der Massenstromebene modelliert werden, wenn die entsprechenden zufließenden und abfließenden Massenströme jeweils mittels einer Massenstrommessvorrichtung ermittelt werden, sodass der Abgasmassenstrom $msagr\_w$ aufgrund der Massenstrombilanz nach Gleichung (4) direkt berechnet werden kann. Dabei wird der Massenstrom $\dot{m}_{dk}$ durch die Drosselklappe 30 mittels des Heißfilm-Luftmassenmessers 25 ermittelt, der Tankentlüftungsmassenstrom $mste\_w$ durch die Massenstrommessvorrichtung 65. Für den abfließenden Massenstrom $\dot{m}_{zyl}$ durch die Zylinder des Verbrennungsmotors 35 kann im Saugrohr 15 zusätzlich in Strömungsrichtung der Einmündung des Abgasrückführkanals 5 nachfolgend eine Massenstrommessvorrichtung angeordnet sein.

**Patentansprüche**

1. Verfahren zur Überwachung eines durch ein Stellelement (1) eingestellten Massenstroms durch eine erste Massenstromleitung (5) einer Brennkraftmaschine (10), **dadurch gekennzeichnet, dass** ein erster Wert für eine Temperatur am Stellelement (1) gemessen wird, dass ein zweiter Wert für die Temperatur am Stellelement (1) in Abhängigkeit mehrerer Betriebskenngrößen der Brennkraftmaschine (10) modelliert wird und dass in Abhängigkeit einer Differenz zwischen dem ersten Wert und dem zweiten Wert die Richtung des Massenstroms ermittelt wird.

2. Verfahren nach Anspruch 1, **dadurch gekennzeichnet, dass** der zweite Wert abhängig von einem Druck vor dem Stellelement (1), einem Druck hinter dem Stellelement (1), einer Stellung des Stellelements (1) und eines modellierten Massenstroms durch das Stellelement (1) ermittelt wird.

3. Verfahren nach Anspruch 2, **dadurch gekennzeichnet, dass** der Massenstrom durch das Stellelement (1) abhängig von einer Massenstrombilanz oder einer Bilanz einer davon abgeleiteten Größe einer zweiten Massenstromleitung (15) der Brennkraftmaschine (10), in die die erste Massenstromleitung (5) mündet, modelliert wird.

4. Verfahren nach einem der vorherigen Ansprüche, **dadurch gekennzeichnet, dass** die Differenz zwischen dem ersten Wert und dem zweiten Wert für die Temperatur am Stellelement (1) mit einer vorgegebenen Schwelle verglichen wird und dass die Richtung des Massenstroms durch das Stellelement (1) aus der Lage der Differenz bezüglich der vorgegebenen Schwelle ermittelt wird.

5. Verfahren nach einem der vorherigen Ansprüche, **dadurch gekennzeichnet, dass** die Stellung des Stellelementes (1) in Abhängigkeit der Differenz zwischen dem ersten Wert und dem zweiten Wert für die Temperatur am Stellelement (1) korrigiert wird.

**6.** Vorrichtung zur Überwachung eines durch ein Stellelement (1) eingestellten Massenstroms durch eine erste Massenstromleitung (5) einer Brennkraftmaschine (10), **dadurch gekennzeichnet, dass** ein Temperatursensor (50) zur Messung eines ersten Wertes für eine Temperatur am Stellelement (1) vorgesehen ist, dass Mittel (500) zur Modellierung eines zweiten Wertes für die Temperatur am Stellelement (1) in Abhängigkeit mehrerer Betriebskenngrößen der Brennkraftmaschine (10) vorgesehen sind und dass Mittel (300, 310) zur Ermittlung einer Richtung des Massenstroms in Abhängigkeit einer Differenz zwischen dem ersten Wert und dem zweiten Wert vorgesehen sind.

**Claims**

**1.** Method for using an mass flow line (5) of an internal combustion engine (10) to monitor a mass flow set by means of an actuator (1), **characterized in that** a first value of a temperature is measured at the actuator (1), **in that** a second value of the temperature at the actuator (1) is modelled as a function of a plurality of operating variables of the internal combustion engine (10), and **in that** the direction of the mass flow is determined as a function of a difference between the first value and the second value.

**2.** Method according to Claim 1, **characterized in that** the second value is dependent on a pressure upstream of the actuator (1), a pressure downstream of the actuator (1), a position of the actuator (1) and a modelled mass flow through the actuator (1).

**3.** Method according to Claim 2, **characterized in that** the mass flow through the actuator (1) is modelled as a function of a mass flow balance or a balance of a variable, derived therefrom, of a second mass flow line (15) of the internal combustion engine (10) into which the first mass flow line (5) opens.

**4.** Method according to one of the preceding claims, **characterized in that** the difference between the first value and the second value of the temperature at the actuator (1) is compared with a predefined threshold, and **in that** the direction of the mass flow through the actuator (1) is determined from the position of the difference with respect to the threshold which is provided.

**5.** Method according to one of the preceding claims, **characterized in that** the position of the actuator (1) is corrected as a function of the difference between the first value and the second value of the temperature at the actuator (1).

**6.** Device for using a mass flow line (5) of an internal combustion engine (10) to monitor a mass flow set by means of an actuator element (1), **characterized in that** a temperature sensor (50) is provided for measuring a first value of a temperature at the actuator (1), **in that** means (500) are provided for modelling a second value of the temperature at the actuator (1) as a function of a plurality of operating variables of the internal combustion engine (10) and **in that** means (300, 310) are provided for determining a direction of the mass flow as a function of a difference between the first value and the second value.

**Revendications**

**1.** Procédé de surveillance d'un débit massique réglé par un élément de réglage (1) à travers une conduite de débit massique (5) d'un moteur à combustion interne (10),
**caractérisé en ce qu'**
on mesure une première valeur pour une température au niveau de l'élément de réglage (1), on modélise une deuxième valeur pour la température au niveau de l'élément de réglage (1) en fonction de plusieurs grandeurs caractéristiques du fonctionnement du moteur à combustion interne (10) et en fonction d'une différence entre la première valeur et la deuxième valeur, on détermine la direction du débit massique.

**2.** Procédé selon la revendication 1,
**caractérisé en ce qu'**
on détermine la deuxième valeur en fonction d'une pression en amont de l'élément de réglage (1), d'une pression en aval de l'élément de réglage (1), d'une position de l'élément de réglage (1) et d'un débit massique modélisé à travers l'élément de réglage (1).

**3.** Procédé selon la revendication 2,
**caractérisé en ce qu'**

on modélise le débit massique à travers l'élément de réglage (1) en fonction d'un bilan de débit massique ou d'un bilan d'une grandeur dérivée de celui-ci d'une deuxième conduite de débit massique (15) du moteur à combustion interne (10), dans laquelle débouche la première conduite de débit massique (5).

4. Procédé selon l'une des revendications précédentes,
**caractérisé en ce qu'**
on compare la différence entre la première valeur et la deuxième valeur de la température au niveau de l'élément de réglage (1) à un seuil prédéterminé et on détermine la direction du débit massique à travers l'élément de réglage (1) à partir de la position de la différence par rapport au seuil prédéterminé.

5. Procédé selon l'une des revendications précédentes,
**caractérisé en ce qu'**
on corrige la position de l'élément de réglage (1) en fonction de la différence entre la première valeur et la deuxième valeur de la température au niveau de l'élément de réglage (1).

6. Dispositif de surveillance d'un débit massique réglé par un élément de réglage (1) à travers une première conduite de débit massique (5) d'un moteur à combustion interne (10),
**caractérisé en ce qu'**
un capteur de température (50) mesure une première valeur de température au niveau de l'élément de réglage (1), des moyens (500) modélisent une deuxième valeur de température au niveau de l'élément de réglage (1) en fonction de plusieurs grandeurs caractéristiques du fonctionnement du moteur à combustion interne (10) et des moyens (300, 310) déterminent une direction du débit massique en fonction d'une différence entre la première valeur et la deuxième valeur.

EP 1 411 233 B1

# Fig.1

# Fig.2

Fig.3

125        135   120   130

rfdsorgi_w ──────────[ − ]──────────[ + ]──[ × ]──[ − ]──────────> msagr_w

rlfgroh_w ───────────┘

140   115

ps_w ──────────[ △ ]──[ ÷ ]──┘

fvisrm_w ──────────────────┘

umsr[n_w ────────────────────────────┘

mste_w ──────────────────────────────────┘

## Fig.4

300        310

tgagrv_w_G ──────────>┌──────────┐────────>┌──────┐────────>
                      │          │         └──────┘
                      │          │
tgagrv_w_M ──────────>│          │
                      └────┬─────┘
                           │
                           ▼
                        ┌──────┐ 320
                        └──────┘
                           │
                           ▼
                        ┌──────┐ 1
                        └──────┘

## Fig.5

**EP 1 411 233 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4774833 A